# NEUE EUROPÄISCHE PATENTSCHRIFT

(11) **EP 0 707 935 B2**
(45) Veröffentlichungstag und Bekanntmachung des Hinweises auf die Entscheidung über den Einspruch: **26.03.2003**
(45) Hinweis auf die Patenterteilung: 05.01.2000
(21) Anmeldenummer: 95116313.8
(22) Anmeldetag: 17.10.1995
(51) Int. Cl.: B29C 44/34, B29C 44/50

(54) **Verfahren zur Herstellung von mikrozellulären Schäumen**
Method of making micro cellular foams
Procédé de production de mousse à micropores

(30) Priorität: 22.10.1994 DE 4437860
(43) Veröffentlichungstag der Anmeldung: 24.04.1996
(73) Patentinhaber: BASF AKTIENGESELLSCHAFT, 67056 Ludwigshafen (DE)
(72) Erfinder: Baumgartl, Horst, Dr., D-55122 Mainz (DE); Dietzen, Franz-Josef, Dr., D-67071 Ludwigshafen (DE); Swoboda, Johann, Dr., D-67063 Ludwigshafen (DE)

(56) Entgegenhaltungen:
- EP-A- 0 486 957
- WO-A-95/24440
- AU-A- 5 777 394
- DE-A- 2 501 966
- DE-A- 3 418 506
- US-A- 4 344 710
- US-A- 5 158 986
- PATENT ABSTRACTS OF JAPAN vol. 013, no. 514 (M-894), 17.November 1989 & JP-A-01 209120 (SEKISUI PLASTICS CO LTD), 22.August 1989,

## Beschreibung

Die Erfindung betrifft ein kontinuierliches Verfahren zur Herstellung von bahnförmigen mikrozellulären Schaumstoffen aus Polystyrol durch Imprägnieren einer Thermoplastschmelze mit einem flüchtigen Treibmittel im überkritischen Zustand und anschließendes Entspannen auf Normaldruck.

Mikrozelluläre Schaumstoffe mit mittleren Zelldurchmessern von 1 bis 30 µm sind bekannt. Sie zeichnen sich gegenüber üblichen Schaumstoffen mit Zelldurchmessern über 100 µm durch verbesserte mechanische Eigenschaften, insbesondere eine höhere Zähigkeit, aus. Die US-A 4 473 665 beschreibt die diskontinuierliche Herstellung (Autoklavprozeß) mikrozellulärer Schäume durch Imprägnierung flächiger Formteile mit überkritischen Treibmitteln bei Drücken zwischen 50 bis 500 bar. Der Imprägnierprozeß erfolgt bei Temperaturen deutlich unterhalb der Glastemperatur des amorphen Thermoplasten. Das molekular gelöste überkritische Treibmittel wirkt als effizienter Weichmacher und führt zu einer drastischen Absenkung der Glastemperatur des Polymeren (ca. 80°C für PS, ca. 200°C für PPO). Beim Entspannen kommt es zur Phasentrennung unter Ausbildung einer hohen Anzahl von Nukleierungskeimen (10⁷ bis 10¹³ Keime/cm³), die anschließend zu mikrozellulären Hohlräumen heranwachsen.

Folgende Nachteile schränken die Praxistauglichkeit des Verfahrens jedoch erheblich ein:
1. extrem lange Imprägnierzeiten infolge niedriger Diffusionsgeschwindigkeiten der Treibmittel in den unaufgeschmolzenen Thermoplasten,
2. Bauteilverzug im Formteil während des Formgebungsprozesses (z.B. Spritzguß) eingefrorene Spannungen relaxieren im Verlauf des Imprägnier- und Schäumvorgangs.

Wünschenswert wäre deshalb ein kontinuierliches Verfahren zur Produktion mikrozellulärer Schaumstoffe. Durch Extrusion treibmittelhaltiger Thermoplastschmelzen lassen sich vorgenannte Nachteile umgehen. Dank der innigen Durchmischung der Schmelze ist eine rasche Treibmittelsättigung des Thermoplasten im Extruder möglich. Erfolgt darüber hinaus die Druckentlastung (Schäumvorgang) und der Formgebungsprozeß gleichzeitig, so tritt auch kein Formteilverzug auf.

Die Entspannung der treibmittelhaltigen Schmelze in der Extruderdüse muß unter kontrollierten Bedingungen erfolgen, da eine zu schnelle Druckentlastung der niedrigviskosen Schmelze zu einem explosionsartigen Aufschäumen unter Ausbildung einer sehr inhomogenen makrozellulären Schaumstruktur oder gar zu einem Zusammenfallen des Schaumes führt.

So wird z.B. nach WO-A 88/05 379 ein mikrozellulärer Schaum mit integraler Haut und einer Zellengröße von 2 bis 25 µm hergestellt, indem man die mit dem Treibmittel imprägnierte Schmelze unter Abkühlung in eine Druckkammer extrudiert, deren Innendruck so gewählt wurde, daß ein Aufschäumen der Schmelze während des Verfestigungsprozesses des Thermoplasten vermieden wird. Nach der sich anschließenden Entspannung können die Randzonen des Extrudates durch Verlängerung der drucklosen Verweilzeit gezielt an Treibmittel verarmt werden, so daß beim anschließenden Aufheizen über die Glastemperatur des treibmittelhaltigen Thermoplasten hinaus eine mikrozelluläre Schaumfolie mit kompakten Randschichten (Integralschaum) entsteht. Der beschriebene Herstellprozeß erfordert dem eigentlichen Extrusionsschritt nachgeschaltete komplizierte Druck- und Temperaturregelungseinrichtungen.

Nach WO-A 92/17 533, auf die der Oberbegriff des Anspruchs 1 gestützt ist, wird ein supermikrozellulärer Schaum mit einer mittleren Zellgröße unter 2 µm hergestellt, indem man eine Kunststoffschmelze mit einem Treibmittel im überkritischen Zustand imprägniert. Nach einer speziellen Ausführungsform wird die Imprägnierung in einem Zweiwellenextruder vorgenommen, dann wird die Schmelze in ebenfalls eine Druckkammer überführt, die Viskositätserhöhung (Schmelzeverfestigung) erfolgt auf gekühlten Walzen in der Druckkammer. Zellnukleierung und Zellwachstum erfolgt beim Entspannen des gekühlten Extrudats in einer der Druckkammer nachgeschalteten temperierten Schäumkammer. Auch hier sind komplizierte Apparaturen notwendig, um die Schaumfolie herzustellen. Infolge der geringen Wärmeleitfähigkeit der Thermoplastschmelzen können nach beiden Verfahren nur dünne Schaumfolien, aber keine dicken Schaumstoffplatten hergestellt werden.

Der Erfindung lag also die Aufgabe zugrunde, ein einfaches Verfahren zur kontinuierlichen Herstellung von mikrozellulären Schaumstoffbahnen aus amorphen thermoplastischen Kunststoffen zu entwickeln, welches es erlaubt, auf die bislang notwendigen komplizierten Druckhalte- und Temperiereinrichtungen nach dem Extrusionsschritt zu verzichten. Ein spezielles Ziel der Erfindung war die Herstellung von plattenförmigen mikrozellulären Schaumstoffen mit einer Dicke von mehr als 10 mm.

Gegenstand der Erfindung ist ein Verfahren zur Herstellung von bahnförmigen mikrozellulären Schaumstoffen einer Dicke von mindestens 10 mm aus Polystyrol durch Imprägnieren einer Polystyrolschmelze mit einem flüchtigen Treibmittel, welches sich im überkritischen Zustand befindet, anschließendes Entspannen auf Normaldruck und Abkühlen auf Raumtemperatur, wobei die Schmelze zu einer Schaumstoffbahn expandiert und sich verfestigt. Das Verfahren ist dadurch gekennzeichnet, daß in einer ersten Extrusionszone A der Thermoplast bei einer Temperatur von 150 bis 250°C mit dem Treibmittel imprägniert wird, und daß in einer zweiten Extrusionszone B die treibmittelhaltige Schmelze um mindestens 40°C auf eine Temperatur von 70 bis weniger als 120°C abgekühlt wird.

Der Erfindung liegt die Erkenntnis zugrunde, daß durch das in der Stufe A unter hohem Druck in der Thermoplastschmelze gelöste Treibmittel die Viskosität der Schmelze derart stark erniedrigt wird, daß in Stufe B die Schmelze auf bzw. unter die Glastemperatur des treibmittelfreien Thermoplasten abgesenkt werden kann, ohne eine Blockierung der Extrusion durch Erstarrung der Matrix befürchten zu müssen. Die hohe Viskosität der treibmittelhaltigen Schmelze bei bzw. unter der Glastemperatur des treibmittelfreien Thermoplasten verhindert ein explosionsartiges Aufschäumen und gestattet einen kontrollierten Schäumvorgang auch ohne der Extrusion nachgeschaltete komplexe Druck- und Temperaturregeleinrichtungen. Außerdem ist mit dem Aufschäumen ein schneller Anstieg der Glastemperatur des an Treibmittel zunehmend verarmenden Extrudats verknüpft. Unterschreitet die Schaumtemperatur die aktuelle Glastemperatur des Systems Thermoplast/Treibmittel, so kommt es zu einem schlagartigen Einfrieren der mikrozellulären Struktur.

Nach dem erfindungsgemäßen Verfahren können grundsätzlich alle Styrolpolymerisate, z.B. Homopolystyrol, Copolymerisate des Styrols, z.B. mit Acrylnitril und (Meth-)Acrylsäureestern, kautschukmodifizierte, sogenannte schlagfeste Styrolpolymerisate, sowie Polystyrol/Polyphenylenether-Blends verschäumt werden.

Geeignete Treibmittel sind insbesondere solche flüchtigen Substanzen, die eine kritische Temperatur zwischen 10 und 150°C aufweisen, beispielsweise Kohlendioxid, Ethan, Ethylen, Propan, Propylen, Stickstoffmonoxid und Schwefelhexafluorid, sowie Gemische dieser Treibmittel in beliebigen Mengenverhältnissen, die zusätzlich noch geringe Anteile polarer Treibmittel höherer kritischer Temperatur, wie Alkohole, Ether und Ketone, enthalten können.Besonders bevorzugt ist Kohlendioxid.

Es ist wesentlich, daß beim Imprägnieren der Kunststoffschmelze mit dem Treibmittel sich dieses im überkritischen Zustand befindet. Bei Kohlendioxid sind dies 31°C und 70 bar. Wesentlich ist auch, daß die Imprägnierung oberhalb der Glastemperatur des Thermoplasten durchgeführt wird, so daß dieser als Schmelze vorliegt. Die Glastemperatur von Polystyrol liegt bei 100°C. Bevorzugt wird hier die Imprägnierung in der Extrusionszone A bei Temperaturen zwischen 150 und 250°C, insbesondere zwischen 180 und 220°C, und bei Drücken zwischen 50 und 500 bar, insbesondere zwischen 100 und 300 bar durchgeführt. Unter diesen Bedingungen lösen sich etwa 5 bis 10 Gew.-% Kohlendioxid im Polystyrol. Dadurch sinkt die Glastemperatur der Schmelze (d.h. der gesättigten Lösung von CO₂ in Polystyrol-Schmelze) auf unter 40°C ab.

Dadurch wird es möglich, die Schmelze in der Extrusionszone B um mindestens 40°C, vorzugsweise um 70 bis 140°C, abzukühlen, ohne daß sie sich verfestigt. Bevorzugt wird auf eine Temperatur abgekühlt, die mindestens 30°C, vorzugsweise 40 bis 80°C über der Glastemperatur des treibmittelfreien Thermoplasten liegt. Bei Polystyrol wird in der Extrusionszone B auf 70 bis 120°C, insbesondere auf 90 bis 110°C abgekühlt. Der Druck ist bevorzugt der gleiche wie in der Extrusionszone A. Beim Abkühlen steigt naturgemäß die Viskosität der Schmelze an. Durch Wahl der Temperatur kann die für das Auspressen und Expandieren optimale Viskosität eingestellt werden. Überraschend wurde gefunden, daß ein starkes Abkühlen der gasgesättigten Schmelze im Extruder beim anschließenden Entspannen die Ausbildung einer sehr hohen Keimzahldichte begünstigt. Eine hohe Keimdichte ist aber die Voraussetzung für die Ausprägung mikrozellulärer Strukturen. Der mittlere Zelldurchmesser beträgt vorzugsweise 2 bis 30 µm.

Das erfindungsgemäße Verfahren kann in einem einzigen Extruder mit unterschiedlichen Temperaturzonen durchgeführt werden. Bevorzugt ist jedoch, mit zwei Extrudern zu arbeiten, wobei die Zone A einen Zweiwellenextruder mit guter Scherwirkung und die Zone B einen Einwellenextruder mit geringer Scherwirkung umfaßt, der deshalb gut kühlbar ist. Diese apparative Ausgestaltung des Verfahrens ist verhältnismäßig einfach und erfordert keine aufwendigen Druckkammern und gekühlten Walzen zur Steuerung der Keimbildung und des Zellwachstums.

Bei einer besonderen Ausführungsform der Erfindung wird die Schaumstoffbahn im Anschluß an die Verfestigung wieder auf Temperaturen oberhalb der Glastemperatur des Thermoplasten erhitzt, wobei das noch im Thermoplasten erhaltene Treibmittel nachbläht. Dies kann z.B. mit heißer Luft auf einem Förderband, in einem Bad mit heißer Flüssigkeit oder durch Extrusion auf ein beheiztes Metallband geschehen. Auf diese Weise läßt sich die Dichte des Schaumstoffs bis auf 20 g·l⁻¹ verringern. Bevorzugt sind Dichten von bis 200 g·l⁻¹. Die Dichte kann durch die Massetemperatur der Schmelze beim Auspressen aus dem Extruder, durch das Molekulargewicht des Thermoplasten und durch die Menge an gelöstem Treibmittel variiert werden.

Mit dem erfindungsgemäßen Verfahren können Schaumstoffbahnen mit Dicken von 10 bis 200 mm hergestellt werden. Schaumstoffplatten mit Dicken von 20 bis 100 mm sind bevorzugt.

### Beispiel

In einem Doppelschneckenextruder wurde ein Polystyrolgranulat mit einem MVI (200/5) = 4,5 bei 200°C aufgeschmolzen und mit 6 Gew.-% CO₂ unter einem Druck von 200 bar imprägniert. In einem nachgeschalteten Einschneckenextruder wurde die treibmittelgesättigte Polymerschmelze auf 107°C abgekühlt und anschließend in einer Breitschlitzdüse auf 1 bar entspannt. Der sich bildende mikrozelluläre Polystyrolschaum wies eine Dichte von 90 g/l und eine mittlere Zellgröße von 15 µm auf.

### Vergleichsbeispiel

Wird das gleiche Polystyrolgranulat unter gleichen Bedingungen im Doppelschneckenextruder imprägniert, die treibmittelgesättigte Schmelze aber im Einschneckenkühlextruder nur auf 135°C abgekühlt und anschließend entspannt, so wird ein grobzelliger Polystyrolschaum mit einer Dichte von 60 g/l und einem mittleren Zelldurchmesser von ca. 250 µm erhalten.

## Patentansprüche

1. Verfahren zur Herstellung von bahnförmigen mikrozellulären Schaumstoffen einer Dicke von mindestens 10 mm aus Polystyrol durch Imprägnieren einer Polystyrolschmelze mit einem flüchtigen Treibmittel, welches sich im überkritischen Zustand befindet, anschließendes Entspannen auf Normaldruck und Abkühlen auf Raumtemperatur, wobei die Schmelze zu einer Schaumstoffbahn expandiert und sich verfestigt, **dadurch gekennzeichnet, daß** in einer ersten Extrusionszone A der Thermoplast bei einer Temperatur von 150 bis 250°C mit dem Treibmittel imprägniert wird, und daß in einer zweiten Extrusionszone B die treibmittelhaltige Schmelze um mindestens 40°C auf eine Temperatur von 70 bis weniger als 120°C abgekühlt wird.

2. Verfahren nach Anspruch 1, **dadurch gekennzeichnet, daß** das Treibmittel CO₂ ist.

3. Verfahren nach Anspruch 1, **dadurch gekennzeichnet, daß** die Extrusionszone A einen Zweiwellenextruder und die Extrusionszone B einen Einwellenextruder umfaßt.

4. Verfahren nach Anspruch 1, **dadurch gekennzeichnet, daß** der mittlere Zelldurchmesser des Schaums 2 bis 30 µm beträgt.

5. Verfahren nach Anspruch 1, **dadurch gekennzeichnet, daß** die Schaumstoffbahn eine Polystyrolplatte mit einer Dicke von 20 bis 100 mm ist.

6. Verfahren nach Anspruch 1, **dadurch gekennzeichnet, daß** die Schaumstoffbahn im Anschluß an die Verfestigung wieder auf eine Temperatur oberhalb der Glastemperatur der Thermoplasten erhitzt wird, wobei sie weiter aufschäumt.

7. Verfahren nach Anspruch 1, **dadurch gekennzeichnet, daß** die mittlere Dichte des Schaums 20 bis 200 g·l⁻¹ beträgt.

## Claims

1. A process for producing microcellular foams having a thickness of at least 10 mm in continuous sheet form from polystyrene by impregnation of a polystyrene melt with a volatile blowing agent which is present in a supercritical state, subsequent depressurization to atmospheric pressure and cooling to room temperature, as a result of which the melt expands to form a foam sheet and solidifies, wherein the thermoplastic is impregnated with the blowing agent at a temperature of from 150 to 250°C in a first extrusion zone A and the melt containing blowing agent is, in a second extrusion zone B, cooled by at least 40°C to a temperature of from 70 to less than 120°C.

2. A process as claimed in claim 1, wherein the blowing agent is CO₂.

3. A process as claimed in claim 1, wherein the extrusion zone A comprises a twin-screw extruder and the extrusion zone B comprises a single-screw extruder.

4. A process as claimed in claim 1, wherein the mean cell diameter of the foam is from 2 to 30 µm.

5. A process as claimed in claim 1, wherein the foam sheet is a polystyrene board having a thickness of from 20 to 100 mm.

6. A process as claimed in claim 1, wherein the foam sheet is, subsequent to solidification, reheated to a temperature above the glass transition temperature of the thermoplastic, as a result of which it foams further.

7. A process as claimed in claim 1, wherein the mean density of the foam is from 20 to 200 g·l⁻¹.

## Revendications

1. Procédé pour la fabrication de mousses microcellulaires en forme de bande d'une épaisseur d'au moins 10 mm, à partir de polystyrène en fusion, par imprégnation de polystyrène par un agent moussant volatil qui se trouve à l'état supercritique, avec ensuite détente à pression normale et refroidissement à température ambiante, la matière en fusion s'expansant en une bande de mousse et se solidifiant, **caractérisé en ce que** dans une première zone d'extrusion A, le thermoplastique est imprégné par l'agent moussant à une température supérieure à sa température de 150° à 250 °C, et **en ce que** dans une deuxième zone d'extrusion B, la matière en fusion contenant l'agent moussant est refroidie d'au moins 40 °C, à une température de 70 ° à une température inférieure à 100 °C.

2. Procédé selon les revendications 1, **caractérisé en ce que** l'agent moussant est le CO₂.

3. Procédé selon la revendication 1, **caractérisé en ce que** la zone d'extrusion A comprend une extrudeuse à deux arbres et la zone d'exclusion B une extrudeuse à un arbre.

4. Procédé selon la revendication 1, **caractérisé en ce que** le diamètre moyen des cellules de la mousse vaut de 2 à 30 µm.

5. Procédé selon la revendication 1, **caractérisé en ce que** la bande de mousse est une plaque de polystyrène présentant une épaisseur de 20 à 100 mm.

6. Procédé selon la revendication 1, **caractérisé en ce qu'**après la solidification, la bande de mousse est de nouveau chauffée à une température supérieure à la température de transition vitreuse du thermoplastique, grâce à quoi elle continue à mousser.

7. Procédé selon la revendication 1, **caractérisé en ce que** la masse spécifique moyenne de la mousse vaut de 20 à 200 g.l⁻¹.
